(19) Europäisches Patentamt
European Patent Office
Office européen des brevets

(11) **EP 3 945 487 A1**

(12) **EUROPÄISCHE PATENTANMELDUNG**

(43) Veröffentlichungstag:
**02.02.2022 Patentblatt 2022/05**

(21) Anmeldenummer: **21186196.8**

(22) Anmeldetag: **16.07.2021**

(51) Internationale Patentklassifikation (IPC):
**G06Q 30/06** *(2012.01)*

(52) Gemeinsame Patentklassifikation (CPC):
**G06Q 30/0621**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(30) Priorität: **31.07.2020 DE 102020209712**

(71) Anmelder: **Siemens Aktiengesellschaft**
**80333 München (DE)**

(72) Erfinder:
• **Brandt, Sebastian-Philipp**
**81827 München (DE)**
• **Radke, Christine**
**91052 Erlangen (DE)**
• **Truchat, Sebastien**
**91056 Erlangen (DE)**

(54) **VERFAHREN, EINRICHTUNG UND COMPUTERPROGRAMMPRODUKT ZUM ERZEUGEN EINES PRODUKTSPEZIFISCHEN DATENSATZES**

(57) Die Erfindung betrifft ein Verfahren zum Erzeugen eines produktspezifischen Datensatzes zur Beschreibung eines konfigurierbaren Produkts (10), wobei das Produkt (10) eine Mehrzahl von Eigenschaften (IIa-c) aufweist und jeder Eigenschaft (IIa-c) jeweils mehrere Eigenschaftswerte (12a-b, 13a-c, 14an) zuordenbar sind.

Um einen produktspezifischen Datensatz von Eigenschaftswerten, die gültige Varianten eines Produktes angeben, einerseits einfach und andererseits möglichst unabhängig von verwendeten Hardware- bzw. Softwareumgebungen erzeugen zu können, wird vorgeschlagen, dass in einem Datenspeicher (32) einer Datenverarbeitungseinrichtung (30) für jede der Eigenschaften (IIa-c) des Produktes (10) alle jeweils zuordenbaren Eigenschaftswerte (12a-b, 13a-c, 14a-n) bereitgestellt werden, mit einem Transformationsmodul (22) aus der Gesamtmenge von Eigenschaftswerten (12a-b, 13a-c, 14a-n) diejenigen Kombinationen generiert werden, die gültige Konfigurationen (10a, 10b, 10c) des Produktes (10) angeben, wobei das Transformationsmodul (22) zur Generierung der Kombinationen der Eigenschaftswerte (12a-b, 13a-c, 14a-n) vorgegebene Regelsätze anwendet, und die generierten Kombinationen von Eigenschaftswerten (12a-b, 13a-c, 14a-n) von der Datenverarbeitungseinrichtung (30) als produktspezifischer Datensatz abgespeichert werden.

Die Erfindung betrifft auch eine Einrichtung sowie ein Computerprogrammprodukt zur Erzeugen eines produktspezifischen Datensatzes.

FIG 2

EP 3 945 487 A1

**Beschreibung**

Die Erfindung betrifft ein Verfahren zum Erzeugen eines produktspezifischen Datensatzes zur Beschreibung eines konfigurierbaren Produkts, wobei das Produkt eine Mehrzahl von Eigenschaften aufweist und jeder Eigenschaft jeweils mehrere Eigenschaftswerte zuordenbar sind. Die Erfindung betrifft auch eine Einrichtung zur Durchführung des Verfahrens und ein entsprechendes Computerprogrammprodukt.

Produkte, beispielsweise Schalter oder Automatisierungsgeräte sind oftmals in mehreren Varianten erhältlich, die sich durch die konkrete Ausgestaltung mehrerer Eigenschaften des Produkts unterscheiden. Durch spezifische Auswahl von Eigenschaften kann ein Produkt beispielsweise auf Kundenwünsche und technische Bedingungen angepasst werden. Solche Produkte, die durch Anpassung ihrer Eigenschaften spezifiziert werden können, werden im Folgenden auch als konfigurierbare Produkte bezeichnet. Bei einer Konfiguration werden den jeweiligen Eigenschaften konkrete Eigenschaftswerte zugeordnet, deren Kombination schließlich die spezifische Variante des Produkts angibt.

Eine Eigenschaft eines konfigurierbaren Produktes kann beispielsweise eine Spannungsebene sein, auf der das Produkt eingesetzt werden kann. Weitere Eigenschaften können Bauformen, das Vorhandensein und/oder die Anzahl von Zusatzbauteilen (z.B. Schnittstellen, Anschlüssen, Displays) und/oder Farbgebungen betreffen. Die Eigenschaften eines konfigurierbaren Produktes können verschiedene Eigenschaftswerte (auch als "Parameter") bezeichnet annehmen. Beispielsweise können für die Eigenschaft "Spannungsebene" diskrete Werte von "200V", "400V", "1000V", 1500V" zur Verfügung stehen. Neben diskreten Werten können als Eigenschaftswerte auch Wertebereiche angegeben werden, z.B. kann eine Länge einer Komponente wahlweise einen Wert zwischen 0,5m und 5m annehmen.

Üblicherweise geben nicht alle denkbaren Kombinationen von Eigenschaftswerten gültige Varianten des Produkts an. Beispielsweise können sich bestimmte Eigenschaften aufgrund technischer Gegebenheiten bedingen oder ausschließen (z.B. eine Spannungsebene und ein Isoliermaterial), manche Kombinationen sind fest vorgegeben oder werden vom Hersteller des Produkts nicht angeboten. Somit ist die Menge der für ein bestimmtes Produkt gültigen Kombinationen an Eigenschaftswerten üblicherweise deutlich geringer als die Menge aller denkbaren Kombinationen.

Die Kenntnis der tatsächlichen möglichen Kombinationen eines Produktes ist Grundlage für die Konfigurierung des Produktes und beispielsweise für Personen des Vertriebs, des Produktmanagements oder des Einkaufs von großem Wert.

Üblicherweise kann eine solche Kenntnis nur durch langjährige Erfahrung mit dem jeweiligen Produkt und/oder manuell aus Produktblättern gewonnen werden.

Darüber hinaus stellen sogenannte "Konfigurationstools" Programme dar, die anhand der Auswahl bestimmter Eigenschaftswerte unter Verwendung sogenannter "Inferenzmaschinen" berechnen, welche weiteren Eigenschaftswerte zur weiteren Auswahl zur Verfügung stehen. Dies erfordert eine vergleichsweise hohe Rechenleistung und ist für jedes Produkt spezifisch vorzugeben.

Der Erfindung liegt die Aufgabe zugrunde, einen produktspezifischen Datensatz von Eigenschaftswerten, die gültige Varianten eines Produktes angeben, einerseits einfach und andererseits möglichst unabhängig von verwendeten Hardware- bzw. Softwareumgebungen erzeugen zu können.

Zur Lösung dieser Aufgabe werden ein Verfahren, eine Einrichtung und ein Computerprogrammprodukt entsprechend der unabhängigen Patentansprüche angegeben.

Konkret sieht das Verfahren erfindungsgemäß vor, dass in einem Datenspeicher einer Datenverarbeitungseinrichtung für jede der Eigenschaften des Produktes alle jeweils zuordenbaren Eigenschaftswerte bereitgestellt werden, mit einem Transformationsmodul aus der Gesamtmenge von Eigenschaftswerten diejenigen Kombinationen generiert werden, die gültige Konfigurationen des Produktes angeben, wobei das Transformationsmodul zur Generierung der Kombinationen der Eigenschaftswerte vorgegebene Regelsätze anwendet, und die generierten Kombinationen von Eigenschaftswerten von der Datenverarbeitungseinrichtung als produktspezifischer Datensatz abgespeichert werden.

Ein besonderer Vorteil des erfindungsgemäßen Verfahrens besteht darin, dass mit diesem alle gültigen Kombinationen von Eigenschaftswerten bereits im Vorfeld bestimmt werden und als produktspezifischer Datensatz, z.B. in Form einer relationalen Datenbank gespeichert werden können. Damit kann auf eine aufwendige Inferenzmaschine verzichtet werden und es können vergleichsweise einfache Datenbankoperationen verwendet werden, wie sie üblicherweise im Zusammenhang mit relationalen Datenbanken eingesetzt werden. Dadurch dass bei dem Verfahren lediglich die Gesamtmenge der möglichen Eigenschaftswerte sowie passende Regelsätze zur Ermittlung der gültigen Kombinationen zur Verfügung gestellt werden müssen, kann es vergleichsweise einfach durchgeführt werden.

Eine vorteilhafte Ausführungsform des erfindungsgemäßen Verfahrens sieht vor, dass zur Generierung der Kombinationen der Eigenschaftswerte für den produktspezifischen Datensatz geprüft wird, welche aller möglichen Kombinationen der Eigenschaftswerte von den Regelsätzen angegebene logische Regeln erfüllen und solche Kombinationen von Eigenschaftswerten generiert werden, für die eine Erfüllung aller von den Regelsätzen vorgegebenen Regeln festgestellt wurde.

Auf diese Weise können die Regeln mittels einfacher logischer Operationen angewendet werden.

Konkret kann beispielsweise vorgesehen sein, dass die Regelsätze Kombinationsregeln umfassen, die angeben, welche Eigenschaftswerte einer Eigenschaft welche Eigenschaftswerte einer anderen Eigenschaft bedingen oder ausschließen.

Außerdem kann vorgesehen sein, dass die Regelsätze manuell vorgegebene Kombinationen von Eigenschaftswerten umfassen.

Daneben kann vorgesehen sein, dass die Regelsätze Beziehungsregeln umfassen, die angeben, in welcher Beziehung ein Eigenschaftswert einer Eigenschaft zu einem Eigenschaftswert einer anderen Eigenschaft steht.

Außerdem kann vorgesehen sein, dass die Regelsätze Beschränkungen angeben, die Gültigkeitsbereiche von Eigenschaftswerten angeben.

Die Regelsätze können alle der genannten Arten von Regeln sowie eine beliebige Untermenge bzw. Kombination davon umfassen.

Eine weitere vorteilhafte Ausführungsform des erfindungsgemäßen Verfahrens sieht vor, dass zur Festlegung der Regelsätze technisch mögliche Kombinationen von Eigenschaftswerten der Eigenschaften aller gültigen Konfigurationen des Produktes berücksichtigt werden.

Auf diese Weise dienen die anzuwendenden Regeln dazu, aufgrund technischer Überlegungen gewonnene Kombinationen von Eigenschaftswerten zu ermitteln. Technisch nicht mögliche Kombinationen werden hingegen von vornherein ausgeschlossen. Konkret kann bezüglich des Aufbaus des Datensatzes vorgesehen sein, dass der produktspezifische Datensatz Tupel umfasst, mit denen gültige Kombinationen von Eigenschaftswerten angegeben werden.

Solche Tupel können beispielsweise als Zeilen einer Datenbank aufgefasst werden, deren Spalten durch die verschiedenen Eigenschaften des Produkts vorgegeben sind.

Schließlich kann gemäß einer weiteren vorteilhaften Ausführungsform des erfindungsgemäßen Verfahrens vorgesehen sein, dass der produktspezifische Datensatz einer Konfigurationseinrichtung bereitgestellt wird, die unter Verwendung der in dem produktspezifischen Datensatz enthaltenen Eigenschaftswerte gültige Konfigurationen des Produkts angibt.

Damit kann der Datensatz als Grundlage der Funktionsweise einer Konfigurationseinrichtung ("Konfigurationstool") eingesetzt werden, die zur Angabe aller gültigen Varianten des Produkts verwendet wird.

Die oben genannte Aufgabe wird auch durch eine Einrichtung zum Erzeugen eines produktspezifischen Datensatzes zur Beschreibung eines konfigurierbaren Produkts gelöst, wobei das Produkt eine Mehrzahl von Eigenschaften aufweist und jeder Eigenschaft jeweils mehrere Eigenschaftswerte zuordenbar sind.

Erfindungsgemäß weist die Einrichtung einen Datenspeicher und eine Prozessoreinheit auf, die ein Transformationsmodul ausführt, wobei die Einrichtung dazu eingerichtet ist, solche Kombinationen von in dem Datenspeicher bereitgestellten Eigenschaftswerten für jede der Eigenschaften des Produktes mit dem Transformationsmodul zu generieren, die gültige Konfigurationen des Produktes angeben, wobei das Transformationsmodul dazu eingerichtet ist, zur Generierung der Kombinationen der Eigenschaftswerte vorgegebene Regelsätze anzuwenden, und wobei die Einrichtung dazu eingerichtet ist, die generierten Kombinationen von Eigenschaftswerten als produktspezifischen Datensatz abzuspeichern.

Hinsichtlich der erfindungsgemäßen Einrichtung gelten alle zu dem erfindungsgemäßen Verfahren voranstehend und nachfolgend gemachten Ausführungen und umgekehrt in entsprechender Weise, insbesondere ist die erfindungsgemäße Einrichtung zur Durchführung des erfindungsgemäßen Verfahrens in jeder beliebigen Ausführungsform oder einer Kombination beliebiger Ausführungsformen eingerichtet. Auch hinsichtlich der Vorteile der erfindungsgemäßen Einrichtung wird auf die zu dem erfindungsgemäßen Verfahren beschriebenen Vorteile verwiesen.

Schließlich wird die oben genannte Aufgabe auch durch ein Computerprogrammprodukt gelöst, das Befehle umfasst, die bei der Ausführung des Programms durch einen Computer diesen veranlassen, das Verfahren nach einem der Ansprüche 1 bis 9 auszuführen.

Die Erfindung wird nachfolgend anhand eines Ausführungsbeispiels näher erläutert. Die spezifische Ausgestaltung des Ausführungsbeispiels ist für die allgemeine Ausgestaltung des erfindungsgemäßen Verfahrens und der erfindungsgemäßen Einrichtung in keiner Weise einschränkend zu verstehen; vielmehr können einzelne Ausgestaltungsmerkmale des Ausführungsbeispiels in beliebiger Weise frei untereinander und mit den voranstehend beschriebenen Merkmalen kombiniert werden.

Hierzu zeigen

Figur 1    eine schematische Darstellung eines konfigurierbaren Produktes sowie verschiedener Varianten des Produktes;

Figur 2    ein Blockschaltbild zur Erläuterung eines Verfahrens zur Erzeugung eines produktspezifischen Datensatzes; und

Figur 3    eine schematische Ansicht einer Einrichtung zur Durchführung eines Verfahrens zur Erzeugung eines produktspezifischen Datensatzes.

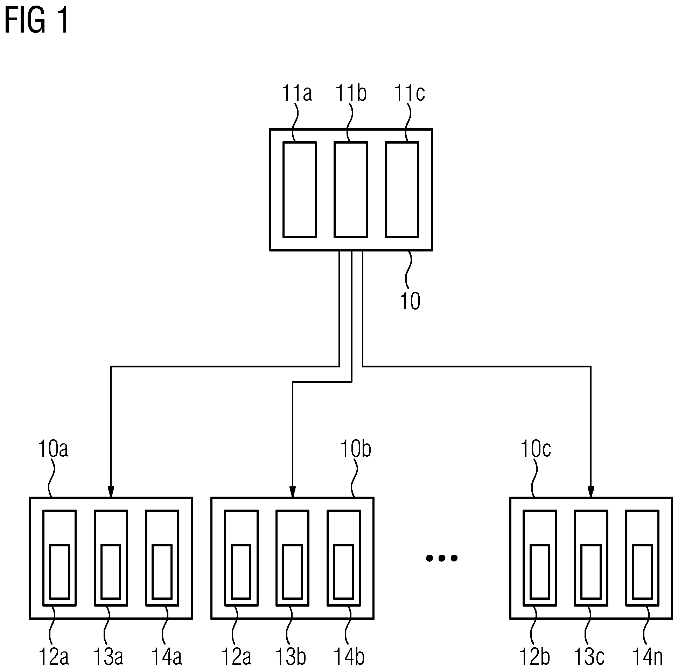

Figur 1 zeigt in höchst schematischer Darstellung ein konfigurierbares Produkt 10. Bei dem Produkt kann es sich beispielsweise um einen Schalter oder ein Automatisierungsgerät handeln. Das Produkt 10 umfasst beispielhaft drei Eigenschaften 11a, 11b, 11c, was in Figur 1 lediglich symbolisch angedeutet ist. Eigenschaften können beispielsweise eine Bauform, Abmessungen, eine Spannungsebene, Stromfestigkeit, ein Material, eine Farbgebung etc. sein. Jede Eigenschaft kann verschiedene Eigenschaftswerte annehmen, beispielsweise kann die Eigenschaft "Bauform" einen der Eigenschaftswerte "Typ A", "Typ B", "Typ C" annehmen, die Eigenschaft "Spannungsebene" kann einen der Eigenschaftswerte "200V", "400V", "1000V", "1500V" annehmen. Auch kontinuierliche Bereiche von Eigenschaftswerten sind möglich, so kann Beispielsweise die Eigenschaft "Anzahl von Eingangsschnittstellen" einen Eigenschaftswert zwischen "2 und 20" annehmen. Durch individuelle Festlegung der Eigenschaftswerte der einzelnen Eigenschaften wird das konfigurierbare Produkt 10 zu einem konfigurierten Produkt. Verschiedene Versionen solcher konfigurierten Produkte 10a, 10b, 10c sind in Figur 1 angedeutet. Neben den in Figur 1 dargestellten drei Varianten des Produkts 10 können selbstverständlich eine Mehrzahl weiterer Varianten existieren.

Ein konfiguriertes Produkt 10a, 10b, 10c zeichnet sich dadurch aus, dass den verschiedenen Eigenschaften 11a, 11b, 11c konkrete Eigenschaftswerte zugeordnet sind. In Figur 1 ist beispielsweise der ersten Variante 10a des Produkts 10 bezüglich der Eigenschaft 11a der konkrete Eigenschaftswert 12a, bezüglich der Eigenschaft 11b der konkrete Eigenschaftswert 13a und bezüglich der Eigenschaft 11c der konkrete Eigenschaftswert 14a zugeordnet. Die Variante 10a des Produktes 10 zeichnet sich somit durch die individuelle Kombination der Eigenschaftswerte 12a, 13a, 14a aus. In entsprechender Weise zeichnet sich die Variante 10b des Produkts 10 durch die individuelle Kombination der Eigenschaftswerte 12a, 13b und 14b aus, während sich die Variante 10c des Produkts durch die individuelle Kombination der Eigenschaftswerte 12b, 13c, 14n auszeichnet. Man erkennt, dass nicht alle Eigenschaftswerte verschiedener Varianten des Produkts 10 unterschiedliche Werte annehmen müssen (z.B. tritt Eigenschaftswert 12a in Variante 10a und 10b auf); lediglich die Kombination der Eigenschaftswerte ist zwischen allen Varianten des Produkts verschieden.

Rein rechnerisch ließe sich die Anzahl möglicher Kombinationen des Produkts als kartesisches Produkt seiner Eigenschaftswerte pro Eigenschaft ermitteln. Oftmals sind jedoch nicht alle Eigenschaftswerten einer Eigenschaft mit allen weiteren Eigenschaftswerten aller anderen Eigenschaften zu gültigen Kombinationen verknüpfbar. So schließen sich beispielsweise durch technische Randbedingungen bestimmte Eigenschaftswerte aus oder bedingen einander.

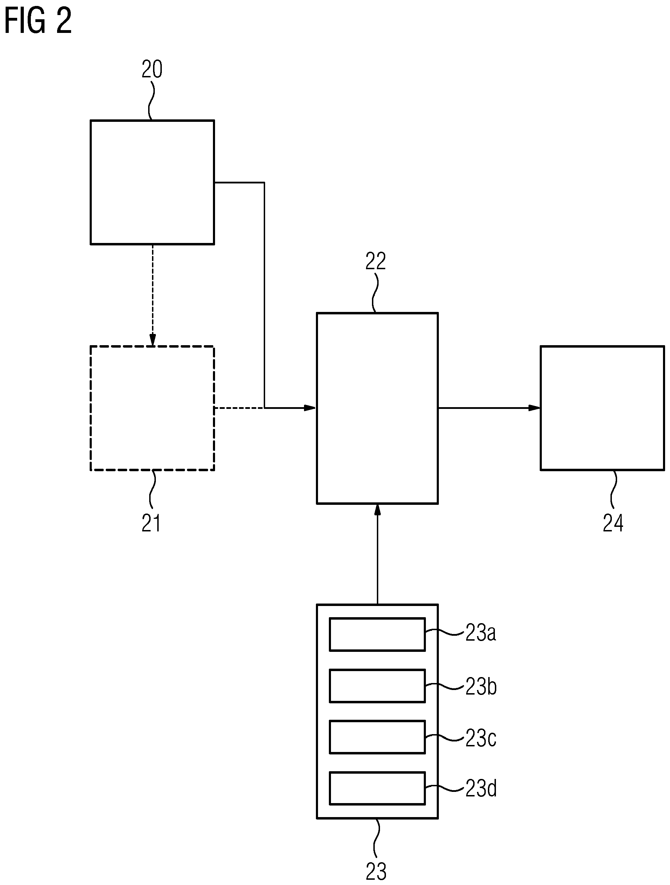

Nachfolgend wird anhand von Figur 2 ein Verfahren beschrieben, wie ausgehend von der Menge aller denkbaren Kombinationen eine Menge aller gültigen Kombinationen (Produktvarianten) ermittelt werden kann. Darüber hinaus wird ein in Prolog implementiertes Beispiel eines entsprechenden computerimplementierten Verfahrens dargestellt. Die dargestellte Lösung ist jedoch unabhängig von einer spezifischen Hardware- oder Softwareumgebung.

Hierzu zeigt Figur 2 ein schematisches Blockschaltbild. Ziel der nachfolgend beschriebenen Vorgehensweise ist es, einen produktspezifischen Datensatz aller gültigen Kombinationen von Eigenschaftswerten eines Produktes zu erzeugen. Dieser Datensatz kann beispielsweise als Basis einer Produkt-Konfigurationseinrichtung verwendet werden.

Zur Durchführung des beschriebenen Verfahrens zum Erzeugen des produktspezifischen Datensatzes werden folgende Informationen benötigt:

- Für ein konfigurierbares Produkt müssen verschiedene Eigenschaften definiert werden;

- Für jede Eigenschaft ist ein Satz von möglichen Eigenschaftswerten (Parametern) bereitzustellen. Wie bereits beschrieben kann ein solcher Eigenschaftswert beispielsweise ein physikalischer Wert einer Eigenschaft (z.B. eine elektrische Spannung) oder die Art einer technischen Komponente (z.B. ein Typ oder eine Bauform eines Schalters) sein.

- Vorzugsweise können bestimmte Eigenschaftswerte unterschiedlicher Eigenschaften festgelegt werden, die einander bedingen oder ausschließen. Dies kann als Grundlage eines Regelsatzes verwendet werden.

- Weiter vorzugsweise können bestimmte Kombinationen von Eigenschaftswerten festgelegt werden, die explizit als gültig ausgewählt werden (z.B. aus wirtschaftlichen oder vertraglichen Gründen). Dies kann als Grundlage eines weiteren Regelsatzes verwendet werden.

- Weiter vorzugsweise können z.B. in Form von mathematischen Beziehungen physikalische Regeln angegeben werden, die gültige Kombinationen von Eigenschaftswerten definieren (z.B. eine maximale Leistung muss größer oder gleich dem Produkt einer Spannung und eines Stroms sein). Dies kann als Grundlage eines weiteren Regelsatzes verwendet werden.

- Weiter vorzugsweise können Eigenschaftswerte als Bereiche numerischer Felder definiert werden (z.B. als Integer oder reelle Zahlen). In diesem Zusammenhang können beliebige Kombinationen oder Beziehungen von Eigenschaftswerten festgelegt werden. Dies kann als Grundlage eines weiteren Regelsatzes verwendet werden.

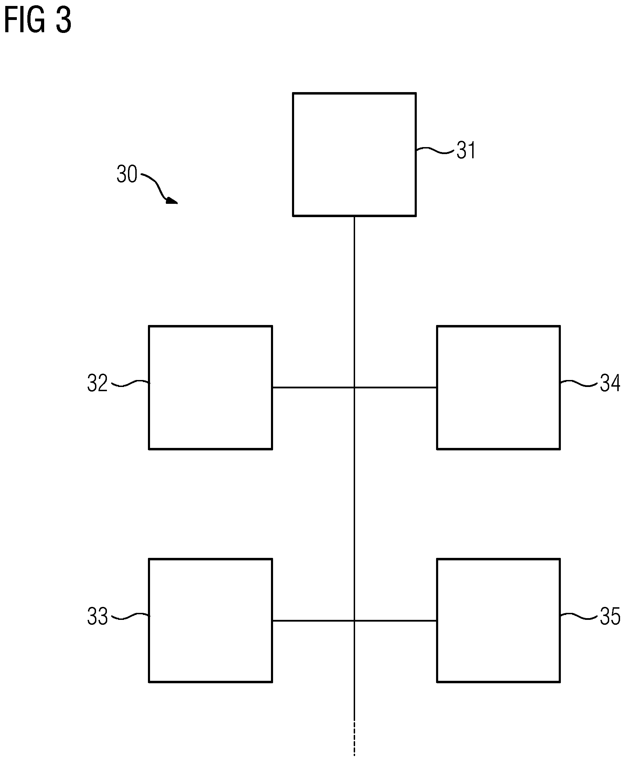

Figur 2 zeigt hierzu Blöcke, die als Software in einer Datenverarbeitungseinrichtung implementiert sein können, wie sie beispielhaft in Figur 3 dargestellt ist. Figur 3 zeigt eine Datenverarbeitungseinrichtung 30 mit einer Prozessoreinheit (CPU) 31, einem permanenten Datenspeicher 32, einem flüchtigen Speicher (RAM) 33, einer Eingabeeinrichtung 34 sowie einer Ausgabeeinrichtung 35. Im permanenten Datenspeicher 32 kann ein Computerprogramm gespeichert sein, das bei Ausführung durch die Prozessoreinheit 31 ein Verfahren ausführt, um den produktspezifischen Datensatz zu erzeugen. Dazu kann die Prozessoreinheit 31 in an sich bekannter Weise mit dem Datenspeicher 32, dem flüchtigen Speicher 33, der Eingabeeinrichtung 34 und der Ausgabeeinrichtung 35 zusammenwirken.

Die Blöcke der Figur 2 stellen Funktionalitäten dar, die beispielsweise durch mathematische Modelle beschrieben sein können.

In einen ersten Block 20 der Figur 2 werden alle Eigenschaften eines bestimmten konfigurierbaren Produktes und die Eigenschaftswerte (Parameter), mit denen sich die Eigenschaften des Produkts beschreiben lassen, bereitgestellt. Hieraus wird wie nachfolgend beschrieben ein in Figur 2 als Block 24 gezeigter Lösungsbereich ("solution space") erzeugt. Der Lösungsbereich stellt in Form des produktspezifischen Datensatzes eine Untermenge aller denkbaren Kombinationen der Eigenschaftswerte dar.

Die Generierung der gültigen Kombinationen von Eigenschaftswerten für den produktspezifischen Datensatz erfolgt mit einem Transformationsmodul 22 unter Anwendung von Regelsätzen, die in Block 23 zusammengefasst sind.

Die in Block 20 bereitgestellten Eigenschaftswerte, die das Produkt charakterisieren, können bei der Implementierung in Prolog beispielsweise als Werte sogenannter Domänen ("Domains") definiert sein. Nachfolgend seien beispielhaft folgende Domänen festgelegt:

$Dom_1 = \{a,b,c,z\}$
$Dom_2 = \{1,2,3\}$
$Dom_3 = \{un,deux,trois\}$

$$Dom_4 = \{\,x \mid x \in \mathbb{R},\, 0 < x < 10\,\}$$

Jede Domäne ($Dom_1$ - $Dom_4$) steht für eine Eigenschaft des Produkts, Werte (z.B. a, b, c, d) der Domänen stellen die Eigenschaftswerte dar. Die beispielhafte Implementierung in Prolog nimmt folgende Form an:

```
dom1(X) :- member(X, [a, b, c, z]).
dom2(X) :- member(X, [1, 2, 3]).
dom3(X) :- member(X, [un, deux, trois]).
dom4(X) :- X #> 0, X #< 10.
```

Es ist ersichtlich, dass Domänen $Dom_1$ - $Dom_3$ Eigenschaftswerte in Form diskreter Werte aufweisen, während Domäne $Dom_4$ einen Bereich umfasst, der eine Nutzung von "Constraint Logic Programming" beinhaltet.

Die in Block 23 zusammengefassten Regelsätze können in Form von logischen Regeln implementiert sein. Die Regeln dienen dazu, gültige Kombinationen von Eigenschaftswerten aus der Gesamtheit aller denkbaren Kombinationen auszuwählen. Nachfolgend werden vier Typen von Regeln verwendet: Kombinationsregeln, manuell festgelegte Regeln, Beziehungsregeln, Beschränkungsregeln. Ohne die Anwendung von Regelsätzen würde der produktspezifische Datensatz der Gesamtmenge aller denkbaren Kombinationen der Eigenschaftswerte entsprechen.

Jede einzelne Kombination von Eigenschaftswerten im produktspezifischen Datensatz kann als Tupel angesehen werden. Im vorliegenden Beispiel mit vier Eigenschaften (Domänen) kann daher jede Kombination als Quadrupel dargestellt werden. Nachfolgend werden die verschiedenen Typen von Regelsätzen näher erläutert.

Kombinationsregeln (Block 23a) umfassen Festlegungen solcher Eigenschaftswerte einer Eigenschaft, die immer mit bestimmten Eigenschaftswerten anderer Eigenschaften kombiniert werden müssen oder die nie mit bestimmten Eigenschaftswerten anderer Eigenschaften kombiniert werden dürfen. Mit anderen Worten werden hier solche Eigenschaftswerte unterschiedlicher Eigenschaften beschrieben, die einander bedingen oder ausschließen.

Hinsichtlich der beispielhaften Implementierung in Prolog sei "Rule" eine Funktion, die als Argument zumindest einen Eigenschaftswerte verwendet und als Ergebnis die übrigen Eigenschaftswerte einer gültigen Kombination liefert:

$$\text{Rule:} Dom_{j_1} \times .. \times Dom_{j_k} \rightarrow Dom_{l_1} \times .. \times Dom_{l_n}$$
$$\left(X_{j_1}, .., X_{j_k}\right) \mapsto \left(Y_{l1}, .., Y_{l_n}\right)$$

mit

$$\{j_1,...,j_k\} \cup \{l_1,...,l_n\} = \{1,...,i\}$$
$$|\{j_1,...,j_k\} \cup \{l_1,...,l_n\}| = k + n = i$$

Der Lösungsbereich (produktspezifischer Datensatz) erfüllt die Funktion "Rule", wenn im Anwendungsbereich der Funktion für alle relevanten

$$(X_{j_1},...,X_{j_k}) \mapsto (Y_{l_1},...,Y_{l_n})$$

gilt:

$$(X_{j_1},...,X_{j_k},Y_{l_1},...,Y_{l_n}) \in SolSpace$$

Block 23 kann mehrere solchermaßen definierten Kombinationsregeln umfassen. Auch negative Regeln können festgelegt sein, die solche Tupel beschreiben, die nicht im produktspezifischen Datensatz enthalten sein dürfen.
Die konkrete Implementierung in Prolog kann somit beispielhaft wie folgt aussehen:

```
% Defining rules for obligatory combinations
cond1(Y) :- member(Y, [1, 2]).
cond1_comp(Y) :- member(Y, [3]).
cond2(Z) :- member(Z, [un, deux]).
cond2_comp(Z) :- member(Z, [trois]).
rule1(X, Y, Z, K) :- dom1(X), cond1(Y) *-> cond2(Z), dom4(K).
rule2(X, Y, Z, K) :- dom1(X), cond1_comp(Y), cond2_comp(Z), dom4(K).
```

Gemäß dem hier vorgestellten Beispiel sorgt "rule1" dafür, dass eine Kombination von vier Eigenschaften nur dann gültig ist, wenn der erste Eigenschaftswert der ersten Eigenschaft zugeordnet ist (zur Domäne "dom1" gehört), der zweite Eigenschaftswert den Wert "1" oder "2" besitzt, der dritte Eigenschaftswert "un" oder "deux" ist und der vierte Eigenschaftswert der vierten Eigenschaft zugeordnet ist (zur vierten Domäne "dom4" gehört. Als komplementäre Regel sorgt "rule2" dafür, dass eine Kombination von vier Eigenschaften auch dann gültig ist, wenn der zweite Eigenschaftswert den Wert "3" annimmt und der dritte Eigenschaftswert "trois" ist.
In Block 23b sind manuell definierte Regeln abgelegt. Diese definieren explizit, welche Kombinationen von Eigenschaftswerten gültig sind:

$$(X_1, X_2, .., X_i) \in SolSpace$$

In entsprechender Weise können ungültige Kombinationen definiert werden.
Die beispielhafte Implementierung in Prolog sieht wie folgt aus:

```
% Defining combinations manually
step1(a, 1, trois, 2).
```

Gemäß diesem Beispiel wird festgelegt, dass die Kombination der Eigenschaftswerte "a", "1", "trois", "2" explizit als gültig angesehen wird.
In Block 23c sind Beziehungsregeln abgelegt. Solche Beziehungsregeln definieren gültige Kombinationen von Eigenschaftswerten durch ihre gegenseitigen Beziehungen. Üblicherweise werden solche Regeln als mathematische Beziehungen (Relationen), z.B. "größer als", "kleiner als", festgelegt. Andere mathematische Beziehungen sind möglich, solange sie eindeutig definiert sind.
Im folgenden Beispiel wird dargestellt, wie eine Beziehung zwischen zwei Eigenschaftswerten die Kombinationen im produktspezifischen Datensatz beeinflussen kann:
Hierzu sei "~" eine beliebige Beziehung (Relation).

$$X_{j_y} \sim X_{j_z}$$
$$j_y, j_z \in \mathbb{N}^*$$
$$\left(\ldots, X_{j_y}, \ldots, X_{j_z}, \ldots\right) \in SolSpace$$

Die entsprechende Implementierung in Prolog sieht wie folgt aus und nutzt eine Sortierung der Eigenschaftswerte der Domänen dom1 und dom3 in lexikografischer Reihenfolge:

```
% Defining relations between elements
rule3(X, Y, Z, K) :- dom1(X), dom2(Y), dom3(Z), X@<Z, dom4(K).
```

Diese Regel besagt, dass der dritte Eigenschaftswert lexikografisch über dem ersten sein muss.

Andere Beziehungen, z.B. physikalischer Art ("maximale Leistung > Spannung * Strom") können in entsprechender Weise implementiert werden.

In Block 23d sind schließlich Beschränkungsregeln enthalten. Solche Beschränkungsregeln definieren erlaubte Bereiche von Eigenschaftswerten. Dieser Aspekt nutzt vorzugsweise eine spezielle Art logischer Programmierung, die als "Constraint Logic Programming" (CLP) bezeichnet wird. Beispielhaft sei angenommen, dass die Domänedom4 Elemente der reellen Zahlen beinhaltet.

In der beispielhaften Implementierung in Prolog wird dies wie folgt dargestellt:

```
% CLP Constraint Logic Programming: relations defining the solution domain
rule4(X, Y, Z, K) :- dom1(X), dom2(Y), dom3(Z), dom4(K), 3*Y #>= K, Y #=< K.
```

Gemäß dieser Regel muss bei einer gültigen Kombination das Dreifache des zweiten Eigenschaftswertes größer oder gleich zum vierten Eigenschaftswert sein und der zweite Eigenschaftswert muss kleiner oder gleich zum vierten Eigenschaftswert sein.

Das Transformationsmodul 22 verwendet die in Block 23 abgelegten Regelsätze, die sich aus allen dargestellten Typen von Regeln beliebig zusammensetzen können oder beliebige Untermengen davon sein können. Mittels des Transformationsmoduls 22 wird der produktspezifische Datensatz mit allen gültigen Kombinationen der Eigenschaftswerte erzeugt. Die gültigen Kombinationen erfüllen dabei die angewendeten Regelsätze.

Die beispielhafte Implementierung in Prolog sieht wie folgt aus:

```
/*The solution space is the union (OR operator ;)of all the sets defined by {rule1, rule2} and the intersection (AND
operator ,) with the set defined by rule3, and again united with the elements defined by step1.*/ rules(X, Y, Z, K) :-
(rule1(X, Y, Z, K); rule2(X, Y, Z, K)), (rule3(X, Y, Z, K), rule4(X, Y, Z, K)); step1(X, Y, Z, K).
```

Der produktspezifische Datensatz ("Lösungsbereich") umfasst die auf diese Weise generierten gültigen Kombinationen von Eigenschaftswerten. Er kann als Basis für eine Produkt-Konfigurationseinrichtung dienen, die direkt mittels Methoden der relationalen Datenbanktechnik auf den produktspezifischen Datensatz zugreifen können, ohne weitere Berechnungen anstellen zu müssen.

Die beispielhafte Implementierung in Prolog erzeugt z.B. eine Textdatei "output.txt", die zuerst den Lösungsbereich angibt und als zusätzliche Information den verwendeten Problembereich aufzeigen kann. Der Inhalt der Datei "output.txt" kann beispielsweise wie folgt aussehen:

```
[SOLUTION dimension,16]
[[a,1,un,_#2098391(1..3)],[a,1,deux,_#2098365(1..3)],[a,
2,un,_#2098339(2..6)],[a,2,deux,_#2098313(2..6)],[b,1,un ,_#2098287(1..3)],[b,1,deux,_#2098261(1..3)],[b,2,un,_
#2                                          098235(2..6)],[b,2,deux,_#2098209(2..6)],[c,1,un,_#20981
83(1..3)],[c,1,deux,_#2098157(1..3)],[c,2,un,_#2098131(2 ..6)],[c,2,deux,_#2098105(2..6)],[a,3,trois,_#2098079(3
. .9)],[b,3,trois,_#2098053(3..9)],[c,3,trois,_#2098027(3. .9)],[a,1,trois,2]]

[PROBLEM dimension, 36]
[[a,1,un,_#2099429(1..9)],[a,1,deux,_#2099403(1..9)],[a, 1,trois,_#20 99377(1..9)],[a,2,un,_#2099351(1..9)],[a,2,d
eux,_#2099325(1..9)],[a,2,trois,_#2099299(1..9)],[a,3,un ,_#2099273(1..9)],[a,3,deux,_#2099247(1..9)],[a,3,trois,
_#2099221(1..9)],[b,1,un,_#2099195(1..9)],[b,1,deux,_#20
99169(1..9)],[b,1,trois,_#2099143(1..9)],[b,2,un,_#20991 17(1..9)],[b,2,deux,_#2099091(1..9)],[b,2,trois,_#209906
5(1..9)],[b,3,un,_#2099039(1..9)],[b,3,deux,_#2099013(1. .9)],[b,3,trois,_#2098987(1..9)],[c,1,un,_#2098961(1..9)
], [c,1,deux,_#2098935(1..9)], [c,1,trois,_#2098909(1..9)] ,[c,2,un,_#2098883(1..9)], [c,2,deux,_#2098857(1..9)], [c,
2,trois,_#2098831(1..9)],  [c,3,un,_#20  98805(1..9)],  [c,3,d eux,_#2098779(1..9)],  [c,3,trois,_#2098753(1..9)],
```

[z,1,un ,_#2098727(1..9)], [z,1,deux,_#2098701(1..9)], [z,1,trois, _#2098675(1..9)], [z,2,un,_#2098649(1..9)], [z,2,deux,_#20 98623(1..9)],[z,2,trois,_#2098597(1..9)], [z,3,un,_#20985 71(1..9)],[z,3,deux,_#2098545(1..9)],[z,3,trois,_#209851 9(1..9)]]

Alternativ zu der voranstehend dargestellten Vorgehensweise kann auch vorgesehen sein, dass mit den in Block 20 bereitgestellten Eigenschaftswerten zunächst die Gesamtheit aller denkbaren Kombinationen von Eigenschaftswerten bestimmt wird. Dies ist im optionalen Block 21 gestrichelt gezeigt und stellt hierbei quasi einen Problembereich ("problem space") dar, der nachfolgend wie oben beschrieben auf den Lösungsbereich (Block 24) abgebildet wird. Im Problembereich (Block 21) sind im vorliegenden Beispiel 36 mögliche Quadrupel denkbar, wenn man der Domäne 4 als Wertebereich die Dimension 1 zuweist.

Die beispielhafte Implementierung des Problembereichs in Prolog erfolgt gemäß:

```
% Calculating the problem space
prob_space(L) :- bagof([X, Y, Z, K], (dom1(X), dom2(Y), dom3(Z), dom4(K)), L).
```

Voranstehend wurde ein computerimplementiertes Verfahren zum Erzeugen eines produktspezifischen Datensatzes beschrieben. Hierbei werden mathematische Modelle verwendet, denen eine definierte Logik zugrunde liegen, um regelbasiert die gültigen Kombinationen von Eigenschaftswerten zu ermitteln.

Mit anderen Worten wird aus der sehr großen Menge an Versionen bzw. Varianten eines konfigurierbaren Produktes mittels vorgebbarer Eigenschaften und mittels eines Modells, das beispielsweise durch Tupel zulässiger und/oder nicht zulässiger Eigenschaftswerte gebildet wird, eine Transformation auf zulässige Versionen/Varianten des Produktes ermöglicht. Dies kann als Simulation angesehen werden, die zu zulässigen Versionen/Varianten eines Produktes führt.

Auf diese Weise können Personen, die mit Produktkonfigurationen befasst sind, in intuitiver Weise, nämlich basierend auf zugänglichen Regelsätzen, die sich von technischen Gegebenheiten des Produktes ableiten lassen, Produktvarianten erzeugen und verwalten. Außerdem wird bei dem beschriebenen Verfahren ein produktspezifischer Datensatz unabhängig von jeglichen Hardware- oder Softwareumgebungen erzeugt, der somit universell einsetzbar ist.

Obwohl die Erfindung vorstehend im Detail durch bevorzugte Ausführungsbeispiele näher illustriert und beschrieben worden ist, ist die Erfindung nicht durch die offenbarten Beispiele eingeschränkt und andere Variationen können vom Fachmann hieraus abgeleitet werden, ohne den Schutzumfang der nachfolgenden Patentansprüche zu verlassen.

**Patentansprüche**

1.   Verfahren zum Erzeugen eines produktspezifischen Datensatzes zur Beschreibung eines konfigurierbaren Produkts (10), wobei das Produkt (10) eine Mehrzahl von Eigenschaften (11a-c) aufweist und jeder Eigenschaft (IIa-c) jeweils mehrere Eigenschaftswerte (12a-b, 13a-c, 14a-n) zuordenbar sind, bei dem

- in einem Datenspeicher (32) einer Datenverarbeitungseinrichtung (30) für jede der Eigenschaften (IIa-c) des Produktes (10) alle jeweils zuordenbaren Eigenschaftswerte (12a-b, 13a-c, 14a-n) bereitgestellt werden;
- mit einem Transformationsmodul (22) aus der Gesamtmenge von Eigenschaftswerten (12a-b, 13a-c, 14a-n) diejenigen Kombinationen generiert werden, die gültige Konfigurationen (10a, 10b, 10c) des Produktes (10) angeben, wobei das Transformationsmodul (22) zur Generierung der Kombinationen von Eigenschaftswerten (12a-b, 13a-c, 14a-n) vorgegebene Regelsätze anwendet; und
- die generierten Kombinationen von Eigenschaftswerten (12ab, 13a-c, 14a-n) von der Datenverarbeitungseinrichtung (30) als produktspezifischer Datensatz abgespeichert werden.

2.   Verfahren nach Anspruch 1,
**dadurch gekennzeichnet, dass**

- zur Generierung der Kombinationen von Eigenschaftswerten (12a-b, 13a-c, 14a-n) für den produktspezifischen Datensatz geprüft wird, welche aller möglichen Kombinationen der Eigenschaftswerte (12a-b, 13a-c, 14a-n) von den Regelsätzen angegebene logische Regeln erfüllen; und
- solche Kombinationen von Eigenschaftswerten (12a-b, 13a-c, 14a-n) generiert werden, für die eine Erfüllung aller von den Regelsätzen vorgegebenen Regeln festgestellt wurde.

3.   Verfahren nach Anspruch 1 oder 2,

**dadurch gekennzeichnet, dass**

- die Regelsätze Kombinationsregeln umfassen, die angeben, welche Eigenschaftswerte (12a-b, 13a-c, 14a-n) einer Eigenschaft (IIa-c) welche Eigenschaftswerte (12a-b, 13a-c, 14a-n) einer anderen Eigenschaft (IIa-c) bedingen oder ausschließen.

4. Verfahren nach einem der vorangehenden Ansprüche,
**dadurch gekennzeichnet, dass**

- die Regelsätze manuell vorgegebene Kombinationen von Eigenschaftswerten (12a-b, 13a-c, 14a-n) umfassen.

5. Verfahren nach einem der vorangehenden Ansprüche,
**dadurch gekennzeichnet, dass**

- die Regelsätze Beziehungsregeln umfassen, die angeben, in welcher Beziehung ein Eigenschaftswert (12a-b, 13a-c, 14a-n) einer Eigenschaft (IIa-c) zu einem Eigenschaftswert (12a-b, 13a-c, 14a-n) einer anderen Eigenschaft (IIa-c) steht.

6. Verfahren nach einem der vorangehenden Ansprüche,
**dadurch gekennzeichnet, dass**

- die Regelsätze Beschränkungen angeben, die Gültigkeitsbereiche von Eigenschaftswerten (12a-b, 13a-c, 14a-n) angeben.

7. Verfahren nach einem der vorangehenden Ansprüche,
**dadurch gekennzeichnet, dass**

- zur Festlegung der Regelsätze technisch mögliche Kombinationen von Eigenschaftswerten (12a-b, 13a-c, 14a-n) der Eigenschaften (IIa-c) aller gültigen Konfigurationen (10a-c) des Produktes (10) berücksichtigt werden.

8. Verfahren nach einem der vorangehenden Ansprüche,
**dadurch gekennzeichnet, dass**

- der produktspezifische Datensatz Tupel umfasst, mit denen gültige Kombinationen von Eigenschaftswerten (12a-b, 13a-c, 14a-n) angegeben werden.

9. Verfahren nach einem der vorangehenden Ansprüche,
**dadurch gekennzeichnet, dass**

- der produktspezifische Datensatz einer Konfigurationseinrichtung bereitgestellt wird, die unter Verwendung der in dem produktspezifischen Datensatz enthaltenen Eigenschaftswerte (12a-b, 13a-c, 14a-n) gültige Konfigurationen (10a-c) des Produkts (10) angibt.

10. Einrichtung (30) zum Erzeugen eines produktspezifischen Datensatzes zur Beschreibung eines konfigurierbaren Produkts (10), wobei das Produkt (10) eine Mehrzahl von Eigenschaften (IIa-c) aufweist und jeder Eigenschaft (IIa-c) jeweils mehrere Eigenschaftswerte (12a-b, 13a-c, 14a-n) zuordenbar sind, mit

- einem Datenspeicher (32) und einer Prozessoreinheit (31), die ein Transformationsmodul (22) ausführt;
- wobei die Einrichtung (30) dazu eingerichtet ist, solche Kombinationen von in dem Datenspeicher (32) bereitgestellten Eigenschaftswerten (12a-b, 13a-c, 14a-n) für jede der Eigenschaften (IIa-c) des Produktes (10) mit dem Transformationsmodul (22) zu generieren, die gültige Konfigurationen (10a-c) des Produktes (10) angeben, wobei das Transformationsmodul (22) dazu eingerichtet ist, zur Generierung der Kombinationen der Eigenschaftswerte (12a-b, 13a-c, 14a-n) vorgegebene Regelsätze anzuwenden; und
- wobei die Einrichtung (30) dazu eingerichtet ist, die generierten Kombinationen von Eigenschaftswerten (12a-b, 13a-c, 14a-n) als produktspezifischen Datensatz abzuspeichern.

11. Computerprogrammprodukt, umfassend Befehle, die bei der Ausführung des Programms durch einen Computer diesen veranlassen, das Verfahren nach einem der Ansprüche 1 bis 9 auszuführen.

## FIG 1

11a    11b    11c

10

10a

10b

10c

• • •

12a    13a    14a      12a    13b    14b          12b    13c    14n

FIG 2

FIG 3

Europäisches Patentamt
European Patent Office
Office européen des brevets

# EUROPÄISCHER RECHERCHENBERICHT

**Nummer der Anmeldung**

EP 21 18 6196

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | Hesselfeldt David: "What is a Product Configurator and what are its benefits - Configit", , 3. September 2019 (2019-09-03), XP055865293, Gefunden im Internet: URL:https://configit.com/what-is-a-product-configurator/ [gefunden am 2021-11-23] * das ganze Dokument * ----- | 1-11 | INV. G06Q30/06 |
| X | WYRWICH C. ET AL: "MODEL-BASED PRODUCT CONFIGURATION OF HIGH VARIETY PRODUCT PORTFOLIOS", PROCEEDINGS OF THE DESIGN SOCIETY: DESIGN CONFERENCE, Bd. 1, 1. Mai 2020 (2020-05-01), Seiten 2435-2444, XP055865350, DOI: 10.1017/dsd.2020.287 * das ganze Dokument * ----- | 1-11 | |

**RECHERCHIERTE SACHGEBIETE (IPC)**

G06Q

Der vorliegende Recherchenbericht wurde für alle Patentansprüche erstellt

| Recherchenort | Abschlußdatum der Recherche | Prüfer |
|---|---|---|
| München | 24. November 2021 | Frey, Richard |

KATEGORIE DER GENANNTEN DOKUMENTE

X : von besonderer Bedeutung allein betrachtet
Y : von besonderer Bedeutung in Verbindung mit einer
anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes
Dokument

EPO FORM 1503 03.82 (P04C03)